# EUROPEAN PATENT SPECIFICATION

(11) **EP 2 763 253 B1**
(45) Date of publication and mention of the grant of the patent: **09.12.2015**
(21) Application number: 14165484.8
(22) Date of filing: 10.05.2011
(51) Int. Cl.: H02G 3/04

(54) **Non-woven, self-wrapping thermal sleeve and method of construction thereto**
Selbstwickelnde thermische Vlieshülle und Verfahren zu ihrer Herstellung
Manchon thermique auto-enveloppant non tissé et procédé de fabrication dudit manchon

(30) Priority: 10.05.2010 US 333019 P
(43) Date of publication of application: 06.08.2014
(62) Divisional of application: 11720273.9
(73) Proprietor: Federal-Mogul Powertrain, Inc., Southfield, MI 48033 (US)
(72) Inventor: Harris, David A., Coatesville, PA Pennsylvania 19320 (US); Staudt, Eric K., Reading, PA Pennsylvania 19606 (US)
(74) Representative: Barker, Rosemary Anne

(56) References cited:
- EP-A1- 1 564 321
- WO-A1-00/20201
- DE-U1- 29 910 987
- GB-A- 1 177 131
- GB-A- 2 195 673
- US-A- 5 178 923

## Description

### BACKGROUND OF THE INVENTION

### 1. Technical Field

This invention relates generally to sleeves for protecting elongate members, and more particularly to non-woven, self-wrapping sleeves and to their method of construction.

### 2. Related Art

It is known that wires and wire harnesses earned in sleeves in vehicles, such as in automobiles, aircraft or aerospace craft, can be exposed to potentially damaging radiant heat and can produce undesirable noise while the vehicle is in use. The noise typically stems from the wires or harnesses vibrating against the sleeve and/or adjacent components, wherein the vibration results from vibrating components in the vehicle, and in the case of automotive vehicles, movement of the vehicle over a ground surface. As such, it is customary to spirally wrap wires and wire harnesses with high temperature resistant foil tape and/or sound masking tape to reduce the potential for noise generation. Unfortunately, applying tape is labor intensive, and thus, costly, in addition, the appearance of the tape can be unsightly, particularly over time as the tape wears. Further, in service, tape can provide difficulties in readily accessing the wound wires.

Other than applying tape, it is known to incorporate heat and/or acoustic protection in the form of woven, braided or knitted fabric sleeves about the wires to reduce the potential for damage from heat and/or for noise generation. The respective sleeves are typically manufactured from heat resistant and noise suppressing materials, such as selected monofilament and texturized multifilament polyester yarns. The sleeves are either wrapped and fastened about the wires, or applied as a self wrapping sleeve construction. DE 299 10 987 discloses a non-woven sleeve for protecting elongated flexible articles fastened about said articles by means of an adhesive layer. Further, it is known to provide non-woven sleeves having a non-woven layer and an outer reflective layer, wherein the sleeves are not self-wrappable, and are either wrapped and fastened about the wires with a secondary fastening device, or supplied as a tubular, non-wrappable sleeve. If wrapped and fastened, additional costs are incurred for the fasteners and in attaching the fasteners to the sleeves. Further, additional labor and/or processes are typically involved to secure the sleeves about the wires. In addition, the aforementioned sleeves are typically constructed of a uniform, homogenous construction, and thus, have a constant axial and radial stiffness/flexibility over their full length. As such, if the sleeve is constructed for extreme environments, thereby requiring a high degree of protection against heat and/or sound production, then the walls of the sleeves are constructed having an increased, thickness, and thus, the flexibility of the sleeve is diminished and the weight of the sleeve is increased. These are typically negative traits, particularly in applications requiring the sleeve to be routed around tight comers and having minimal weight. And thus, although these sleeves generally prove useful in providing protection against radiant heat and suppressing noise generation in use, they can be relatively costly to manufacture, with additional costs being incurred to attach fasteners to the sleeves and to secure the sleeves about the wires, and they can be relatively stiff and heavy.

A non-woven sleeve manufactured according to the present invention overcomes or greatly minimizes any limitations of the prior art described above, and also provides enhanced potential to withstand radiant heat and suppress noise generation by elongate members carried in the sleeves.

### SUMMARY OF THE INVENTION

One aspect of the invention provides a self-wrapping, non-woven thermal sleeve for routing and protecting elongate members from radiant heat and/or generating noise and vibration as recited in claim 1..

In accordance with an embodiment of the invention, the first and second regions have a different stiffness.

In accordance with an embodiment of the invention, the first and second regions have a different weight.

In accordance with an embodiment of the invention, the first and second regions extend transversely to the central longitudinal axis and circumferentially about the sleeve to provide longitudinally spaced regions of enhance flexibility.

In accordance with an embodiment of the invention, the first and second regions extend parallel to the central longitudinal axis between the opposite ends to provide the sleeve with strips of increased rigidity.

According to an embodiment of the invention, the non-woven substrate has an outer surface facing away from the central longitudinal axis and a reflective layer is attached to the outer surface.

According to an embodiment of the invention, the reflective layer is provided as a foil laminate.

According to an embodiment of the invention, the low melt fibers are encapsulated in the standard thermoplastic fibers.

According to an embodiment of the invention, the lattice is a knit layer.

According to an embodiment of the invention, the lattice is a monolithic piece of thermoplastic material.

According to another aspect of the invention, a method of constructing a non-woven sleeve for routing and protecting elongate members from radiant heat and/or generating noise and vibration is provided as recited in claim 12.

In accordance with an embodiment of the invention, the method includes attaching a reflective layer to an outer surface of the wall.

In accordance with an embodiment of the invention, the method includes forming the lattice as a knit layer of thermoplastic yarn filaments.

In accordance with an embodiment of the invention, the method includes forming the lattice as an extruded monolithic piece of thermoplastic material.

### BRIEF DESCRIPTION OF THE DRAWINGS

These and other aspects, features and advantages of the invention will become readily apparent to those skilled in the art in view of the following detailed description of presently preferred embodiments and best mode, appended claims, and accompanying drawings, in which:
Figure 1 is a schematic perspective view of one embodiment of a non-woven, self-wrapping thermal sleeve constructed in accordance with the invention carrying and protecting elongate members therein;
Figure 2 is an explode view of the wall of the sleeve of Figure 1;
Figure 2A is an exploded view of a wall of an alternative embodiment of a sleeve constructed in accordance with the invention;
Figure 3 is a schematic perspective view of a further embodiment of a non-woven, self-wrapping thermal sleeve constructed in accordance with the invention carrying and protecting elongate members therein;
Figure 4 is an explode view of the wall of the sleeve of Figure 3; and
Figure 4A is an exploded view of a wall of yet another alternative embodiment of a sleeve constructed in accordance with the invention.

### DETAILED DESCRIPTION OF PRESENTLY PREFERRED EMBODIMENTS

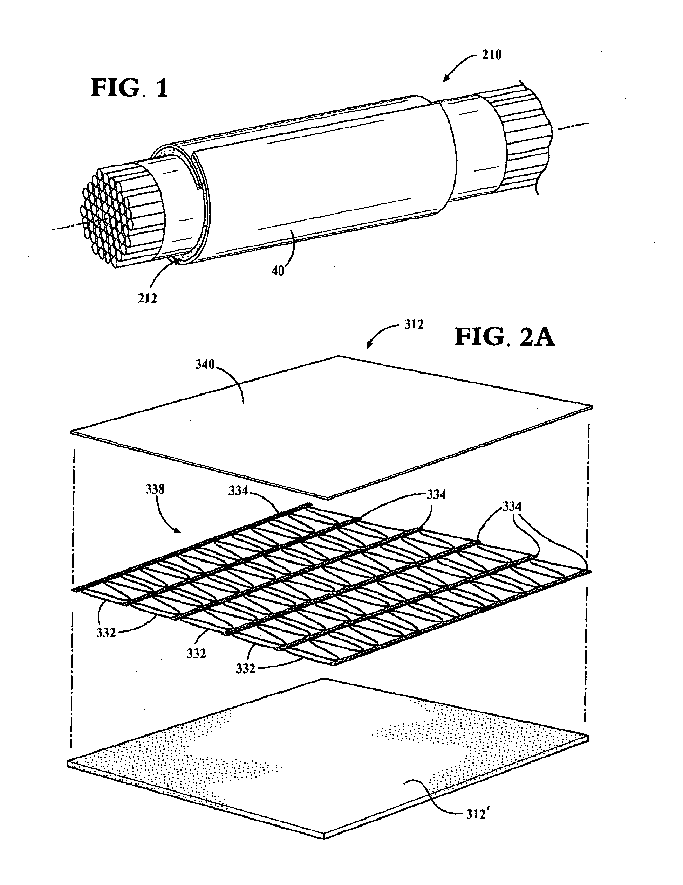

Referring in more detail to the drawings, Figure 1 shows a non-woven, self-wrapping protective thermal sleeve, referred to hereafter as sleeve 210, constructed in accordance with one aspect of the invention. The sleeve 210 has a non-woven substrate layer, referred to hereafter as wall 212, constructed from an engineered non-woven material. The wall 212 is heat-set to take on a self-wrapping tubular "cigarette- style" configuration about a central longitudinal axis to provide an enclosed tubular inner cavity when the wall 212 is in a relaxed state, free of externally applied forces. The cavity is readily accessible along the axis so that elongate members, such as a pipe, wires or a wire harness, for example, can be readily disposed radially into the cavity, and conversely, removed from the cavity, such as during service. The wall 212 can be constructed of any suitable size, including length, diameter and wall thickness, wherein the wall 212 has opposite sides that extend parallel or substantially parallel to the axis between opposite ends. The opposite sides are self-wrapping about the central longitudinal axis to provide the cavity in which the elongate members are received. The opposite sides of the wall 212 are extendible away from one another under an externally applied force to allow the elongate members to be disposed radially into the cavity. Upon disposing the elongate members within the cavity, the external force is released, thereby allowing the opposite sides of the wall 212 to return to their self-wrapped, tubular configuration. Differing physical properties of the sleeve 210 can be provided by constructing a pair of a non-woven layers 212', such as in an airlaying process, for example, and a lattice network having first and second regions of differing physical properties. Standard thermoplastic fibers 234 and/or low melt fibers 232, which can include bi-component fibers (referred to hereafter simply as lattice 38) can be sandwiched between the non-woven layers 212'. The low melt fibers 232 at least partially melt at a temperature lower than the standard thermoplastic fibers 234 when heat treated in a heat-setting process and take on a heat-set configuration, thereby biasing the wall 212 into a heat set shape, represented as a self-curled memory tubular shape. If bi-component fibers are provided as low melt fibers 232, they can be provided having a core of a standard thermoplastic material, such as polyethylene terephthalate (PET), for example, with an outer sheath of polypropylene, polyethylene, or low melt polyester, for example. The standard thermoplastic fibers 234 can be provided as any thermoplastic fiber, such as nylon or PET, for example, and act in part to provide the desired density and thickness (t) to the wall 12, as desired, thereby providing additional thermal protection and rigidity to the sleeve 10, while also being relatively inexpensive compared to the heat-settable fibers 32. The lattice 38 can be sandwiched and at least partially embedded within the layers 212' via a mechanical needling process. During construction, the lattice 38 is sandwiched between the non-woven layers 212' and then the layers 212' are needled to intertwine fibers of the separate layers 212' with one another, thereby forming a unitized non-woven wall 212 structure including the captured lattice 38. The lattice 38 can be formed having any suitable geometric configuration, combination and types of the standard thermoplastic fibers 234 and/or low melt fibers 232, as desired, to form the non-woven wall 212 having the first and second regions 128, 130 of differing propensity to retain a curled heat-set, flexibility and stiffness. In accordance with a further preferred embodiment, the lattice 38 is constructed as a warp knit structure using the desired material, type of yarn (e.g., monofilament and/or multifilament), size, and orientation of yarns (e.g., picks per inch, warp density), for example. Other than being constructed in a knitting process, it is contemplated that braiding, weaving, machining, die cutting, rapid prototyping, and the like, can be used to manufacture a lattice in accordance with the invention. Further, the lattice 38 can be constructed having any suitable thickness or thickness variation, as desired for the intended application. Accordingly, the direction and size of the alternating flexible regions versus stiff regions formed in the wall 212 can be controlled depending on the application requirements. It should be recognized that to facilitate needling, the knit pattern of the lattice 38 can be formed providing the desired openings between adjacent yarn filaments to prevent the filaments 332 from being caught by the needles during the needling process.

Upon capturing the lattice 38 within the wall 212, the wall 212 can have a reflective layer 40 attached thereto. The reflective layer 40 can be provided in any suitable form, such as a thin layer of foil or metalized film, for example. The reflective layer 40 can be adhered via any suitable adhesive to the outer surfaces of the non-woven layers 212', shown here as being adhered to the outer surface on one non-woven layer 212' corresponding what will an outer surface of the sleeve 210. Upon adhering the reflective layer 40 to the wall 212, the wall 212 can be curled into its desired shape, and then heated to cause heat-settable yarns within the lattice 38 to take on a heat-set, curled configuration to bias the wall 212 into a self-curling configuration. This could be done via a heated mandrel, ultrasonic welding, or otherwise, as desired. As shown, by way of example, the lattice 38 has warp-wise (extending along the length of the sleeve 210) extending thermoplastic multifilaments 234, such as PET, by way of example, interlaced with weft-wise extending low-melt monofilaments 232, wherein separate weft-wise extending low-melt monofilaments 232 are knit between adjacent multifilaments and sinusoidal fashion to form the monolithic lattice 38 structure.

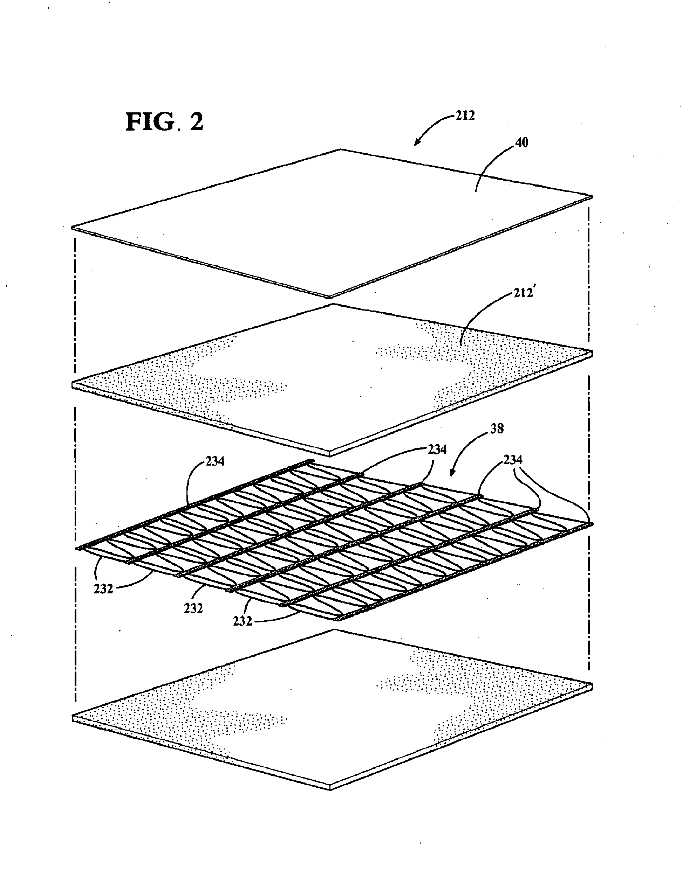

In accordance with an alternative embodiment of the invention, as shown in Figure 2A, rather than having the a wall with a pair of non-woven layers overlying opposite sides of an intermediate lattice, as shown in Figure 2, a wall 312 can be constructed in a lamination process having a single non-woven layer 312' and a reflective layer 340 overlying opposite sides of an intermediate lattice 338. For example, the lattice 338, which is constructed the same as discussed above, is laid over one of the layers 312' and the other layer 340 is placed over the lattice 338, whereupon heat is applied to the lattice 340 to cause thermoplastic filaments 332, 334 within the lattice 338 to at least partially melt. As such, the melted filaments 332, 334 act as glue and cause the sandwiched layers 312', 340 and intermediate lattice 338 to be bonded together to form the unitized wall 312. In order to create a self-curling sleeve configuration with the wall 312, prior to heating the lattice 338, the wall 312 can be first shaped into a curled configuration, and then heated. In one presently preferred method of heating the fibers, an ultrasonic welding process is used to at least partially melt some of the filaments of the lattice 338 to bond the layers 312', 340 to one another. Of course, any suitable method of heating the heat-settable filaments of the lattice 338 can be used. In addition, the layers 312', 340 can be bonded together via an adhesive applied therebetween, or, the layer 312' and the lattice 338 can be needled to mechanically lock the layer 312' to the lattice 338. Then, the reflective layer 340 can be attached and the lattice 338 via an adhesive, whereupon the wall 312 can be heat-set to attain its self-curling configuration.

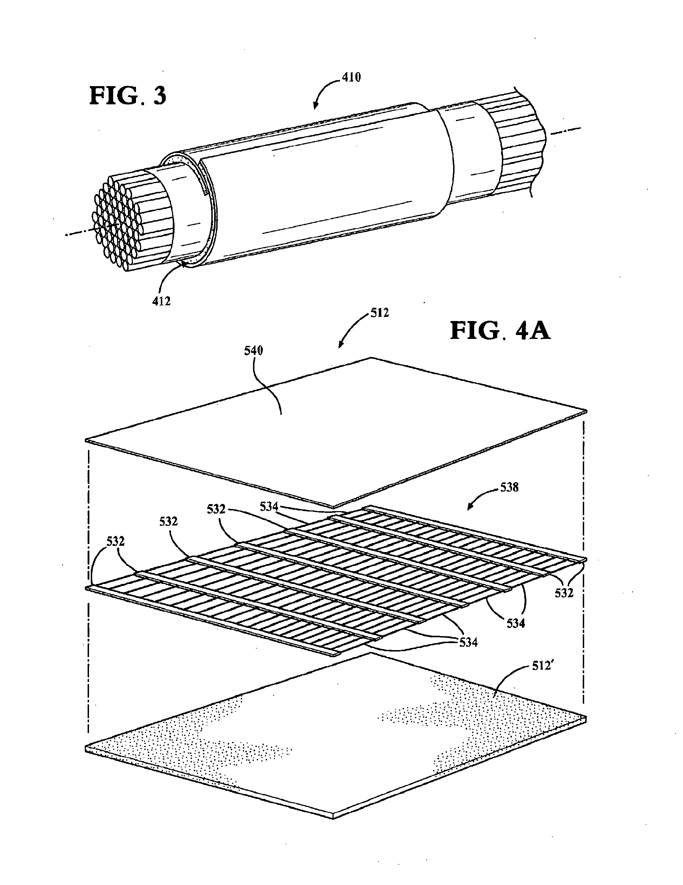

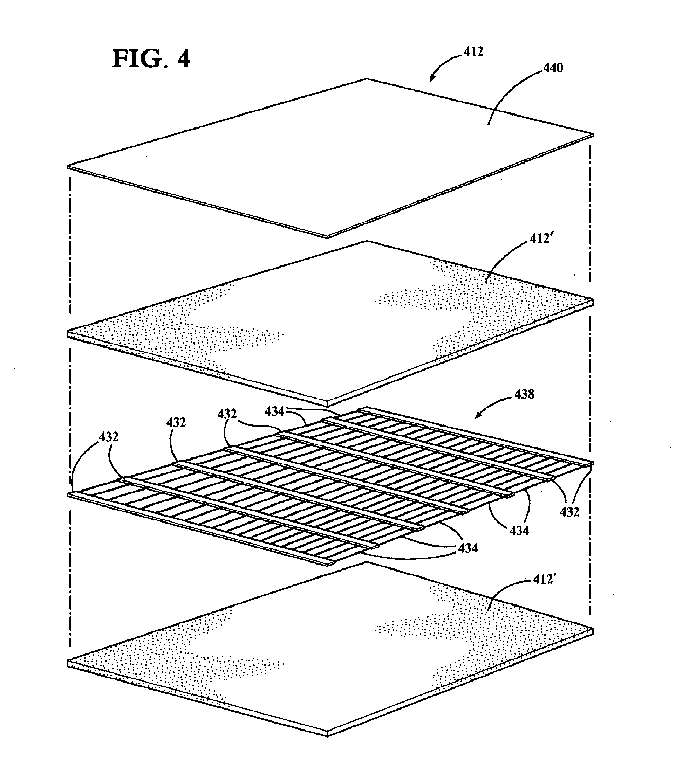

According to a further alternative embodiment of the invention, as shown in Figures 3 and 4, by way of example and without limitation, the aforementioned physical properties of a sleeve 410 can be provided by constructing a pair of a non-woven layers 412', such as in an airlaying process, for example, and a monolithic lattice network of standard thermoplastic material 434 and/or low melt material 432, which can include bi-component fibers as discussed above (referred to hereafter simply as lattice 438) can be sandwiched between the non-woven layers 412'. The lattice 438, if formed as a single composition of material, can be extruded. The lattice 438 is formed having first and second regions of differing physical properties, and, by way of example, has warp-wise (extending along the length of the sleeve 410) extending thermoplastic ribs 434 and weft-wise extending thermoplastic ribs 432 interconnected as a single piece of material with one another. The weft-wise extending ribs 432 are shown as being axially spaced equidistantly from one another to provide discrete, flexible regions therebetween. Further, the weft-wise ribs 432 are provided having an increased cross-section area relative to the warp-wise extending ribs 434, such as via an increased thickness or diameter, to provide enhanced curl memory upon being heat-set. The relatively reduced thickness or width warp-wise ribs 434 provide the sleeve 410 with enhanced flexibility and tensile strength, while at the same time minimize the cost and weight of the sleeve 410. It should be recognized that the type of material used to form the monolithic lattice 438 can be provided as desired for the intended application, such as a standard thermoplastic material, e.g. PET, or a low-melt material, e.g. polypropylene, polyethylene, or low melt polyester, for example, or as a bi-component material, as discussed above.

Upon laminating the lattice 438 in sandwiched relation within the wall 412, the wall 412 can have a reflective layer 440 attached thereto. The reflective layer 440 can be provided in any suitable form, such as a thin layer of foil, metalized film or otherwise, as discussed above. The reflective layer 440 can be adhered via any suitable adhesive to the outer surfaces of the non-woven layers 412', shown here as being adhered to the outer surface on one non-woven layer 412' corresponding what will an outer surface of the sleeve 410. Upon adhering the reflective layer 440 to the wall 412, the wall 412 can be curled into its desired shape, and then heated to cause heat-settable lattice 438 to take on a heat-set, curled configuration to bias the wall 412 into a self-curling configuration. This can be done as described above for the sleeve 310.

In accordance with another aspect of the invention, as shown in Figure 4A, a wall 512 can be constructed having a single non-woven layer 512' and a reflective layer 540 overlying opposite sides of an intermediate lattice 538, wherein the non-woven layer 512' and lattice 538 are constructed the same as described above regarding the non-woven layer 412' and lattice 438. For example, the lattice 538 is laid over one of the layers 512' and the other layer 540 is placed over the lattice 538, whereupon heat is applied to the lattice 540 to cause thermoplastic filaments 532, 534 within the lattice 438 to at least partially melt and act as glue to cause the sandwiched layers 512', 540 to be bonded together to form the unitized wall 512. As discussed above, in order to create a self-curling sleeve configuration with the wall 512, the wall 512 can be first shaped into a curled configuration, and then heated. In addition, the layers 512', 540, can be bonded together via an adhesive applied therebetween, or, the layer 512' and the lattice 538 can be needled to mechanically lock them to one another, whereupon the reflective layer 540 can be attached to the lattice 538 and the wall 512 heat-set to attain the self-curling configuration, as discussed above.

It is to be understood that other embodiments of the invention which accomplish the same function are incorporated herein within the scope of any ultimately allowed patent claims.

## Claims

1. A self-wrapping, non-woven sleeve (210; 410) for routing and protecting elongate members, comprising an elongate non-woven wall (212; 312; 412; 512) having opposite sides extending along a longitudinal axis of said sleeve, said sides being self-wrapped about said longitudinal axis to provide a tubular cavity in absence of an externally applied force, said sides being extendable away from one another under an externally applied force to expose said cavity for insertion of the elongate members, said sides returning to their self-wrapped configuration upon removal of the externally applied force,
**characterised in that** said wall (212; 312; 412; 512) has at least one non-woven layer (212'; 312'; 412'; 512') and a lattice (38; 338; 438; 538) of heat-settable polymeric material attached to said at least one non-woven layer; said lattice having discrete first regions and discrete second regions (232, 234; 332, 334; 432 434; 532, 534), said first and second regions extending alternately, axially or circumferentially and being different and thereby providing said wall with non-uniform physical properties.

2. The sleeve of claim 1 wherein said lattice (438; 538) is a monolithic piece of material.

3. The sleeve of claim 2 wherein said lattice includes warp-wise ribs (434; 534) extending substantially parallel to said longitudinal axis and weft-wise ribs (432; 532) extending substantially transversely to said longitudinal axis.

4. The sleeve of claim 3 wherein said weft-wise ribs (432; 532) have an increased cross-sectional area relative to said warp-wise extending ribs (434; 534).

5. The sleeve of claim 2 wherein said lattice (438; 538) includes a low melt material.

6. The sleeve of claim 1 wherein said wall has a pair of non-woven layers (412') attached to opposite sides of said lattice (438).

7. The sleeve of claim 6 further including a reflective layer (440) attached to one of said non-woven layers (412'), said reflective layer forming an outer surface of said sleeve (410).

8. The sleeve of claim 1 further including a reflective layer (340; 540) attached to said lattice (538).

9. The sleeve of claim 1 wherein said lattice (38; 338) is a knit layer having warp-wise filament yarns (234; 334) extending substantially parallel to said longitudinal axis and weft-wise filament yarns (232; 332) extending substantially transversely to said longitudinal axis, said warp-wise filament yarns being a different material than said weft-wise extending yarns.

10. The sleeve of claim 9 wherein said warp-wise extending yarns (234; 334) are PET.

11. The sleeve of claim 9 wherein said weft-wise extending yarns (232; 332) are a low-melt material.

12. A method of constructing a non-woven sleeve (210; 410) for routing and protecting elongate members from radiant heat and/or generating noise and vibration, comprising:
forming a wall (212; 312; 412; 512) of non-woven material from at least one non-woven layer,
**characterised in that** the method further comprises:
forming a lattice (38; 338; 438; 538) of heat-settable polymeric material such that said lattice is attached to the at least one non-woven layer, said lattice having discrete first regions and discrete second regions (232, 234; 332, 334; 432 434; 532, 534), said first and second regions extending alternately, warp wise or weft wise and being different; and
heat-setting the wall (212; 312; 412; 512) into the tubular configuration so that said first and second alternating regions (232, 234; 332, 334; 432 434; 532, 534) of said lattice (38; 338; 438; 538) extend axially or circumferentially and thereby providing said wall with non-uniform physical properties.

13. The method of claim 12 further including forming the wall from a pair of non-woven layers (212'; 412') and attaching the non-woven layers to opposite sides of the lattice (38; 438).

14. The method of claim 12 further including at least partially melting the lattice (338; 538) to bond the lattice to the at least one non-woven layer (312'; 512').

15. The method of claim 14 further including performing the heat-setting and the melting in the same process.

## Patentansprüche

1. Selbstwickelnde Vlieshülle (210; 410) zum Routen und Schützen von langgestreckten Teilen, die umfasst: eine langgestreckte Vlieswand (212; 312; 412; 512), die über gegenüberliegende Seiten verfügt, die sich entlang einer Längsachse der Hülle erstrecken, wobei die Seiten um die Längsachse selbstgewickelt sind, um in Abwesenheit einer extern angewendeten Kraft einen röhrenförmigen Hohlraum zur Verfügung zu stellen, wobei die Seiten unter einer extern angewendeten Kraft voneinander weg ausziehbar sind, um den Hohlraum zum Einsetzen der langgestreckten Teile zu exponieren, wobei die Seiten nach einem Entfernen der extern angewendeten Kraft in ihre selbstgewickelte Konfiguration zurückkehren,
**dadurch gekennzeichnet, dass** die Wand (212; 312; 412; 512) mindestens über eine Vliesschicht (212'; 312'; 412'; 512') und ein Gitter (38; 338; 438; 538) aus einem thermofixierbaren Polymermaterial, das an der mindestens einen Vliesschicht befestigt ist, verfügt; wobei das Gitter über diskrete erste Bereiche und diskrete zweite Bereiche (232, 234; 332, 334; 432 434; 532, 534) verfügt und sich die ersten und zweiten Bereiche abwechselnd axial oder umlaufend erstrecken und verschieden sind und dadurch die Wand mit uneinheitlichen physikalischen Eigenschaften ausstatten.

2. Hülle gemäß Anspruch 1, wobei das Gitter (438; 538) ein monolithisches Materialstück ist.

3. Hülle gemäß Anspruch 2, wobei das Gitter umfasst: am Kettfaden ausgerichtete Rippen (434; 534), die sich im Wesentlichen parallel zu der Längsachse erstrecken, und am Schussfaden ausgerichtete Rippen (432; 532), die sich im Wesentlichen quer zu der Längsachse erstrecken.

4. Hülle gemäß Anspruch 3, wobei die am Schussfaden ausgerichteten Rippen (432; 532) im Vergleich zu den am Kettfaden ausgerichteten Rippen (434; 534) über eine vergrößerte Querschnittsfläche verfügen.

5. Hülle gemäß Anspruch 2, wobei das Gitter (438; 538) ein Material mit niedriger Schmelztemperatur umfasst.

6. Hülle gemäß Anspruch 1, wobei die Wand aus einem Paar von Vliesschichten (412') besteht, die an gegenüberliegenden Seiten des Gitters (438) befestigt sind.

7. Hülle gemäß Anspruch 6, die weiterhin eine reflektierende Schicht (440) umfasst, die an eine der Vliesschichten (412') befestigt ist, wobei die reflektierende Schicht eine äußere Oberfläche der Hülle (410) bildet.

8. Hülle gemäß Anspruch 1, die weiterhin eine reflektierende Schicht (340; 540) umfasst, die an dem Gitter (538) befestigt ist.

9. Hülle gemäß Anspruch 1, wobei das Gitter (38; 338) eine gestrickte Schicht ist, die über am Kettfaden ausgerichtete Filamentgarne (234; 334) verfügt, die sich im Wesentlichen parallel zu der Längsachse erstrecken, und über am Schussfaden ausgerichtete Filamentgarne (232; 332) verfügt, die sich im Wesentlichen quer zu der Längsachse erstrecken, wobei die am Kettfaden ausgerichteten Filamentgarne aus einem anderen Material bestehen als die am Schussfaden ausgerichteten Garne.

10. Hülle gemäß Anspruch 9, wobei die am Kettfaden ausgerichteten Garne (234; 334) aus PET bestehen.

11. Hülle gemäß Anspruch 9, wobei die am Schussfaden ausgerichteten Garne (232; 332) aus einem Material mit niedrigem Schmelzpunkt bestehen.

12. Verfahren zur Herstellung einer Vlieshülle (210; 410) zum Routen und Schützen von langgestreckten Teilen vor Strahlungswärme und/oder einem Erzeugen von Lärm und Vibration, das umfasst:
Bilden einer Wand (212; 312; 412; 512) aus einem Vliesmaterial aus mindestens einer Vliesschicht,
**dadurch gekennzeichnet, dass** das Verfahren weiterhin umfasst:
Bilden eines Gitters (38; 338; 438; 538) aus einem thermofixierbaren Polymermaterial, so dass das Gitter an der mindestens einen Vliesschicht befestigt ist, wobei das Gitter über diskrete erste Bereiche und diskrete zweite Bereiche (232, 234; 332, 334; 432 434; 532, 534) verfügt, wobei sich die ersten und zweiten Bereiche abwechselnd am Kettfaden oder am Schussfaden ausrichten und verschieden sind; und
Thermofixieren der Wand (212; 312; 412; 512) in eine röhrenförmige Konfiguration, so dass sich die ersten und zweiten Bereiche (232, 234; 332, 334; 432 434; 532, 534) des Gitters (38; 338; 438; 538) axial oder umlaufend erstrecken und dadurch die Wand mit uneinheitlichen physikalischen Eigenschaften ausstatten.

13. Verfahren gemäß Anspruch 12, das weiterhin umfasst: Bilden der Wand aus einem Paar von Vliesschichten (212'; 412') und Befestigung der Vliesschichten an gegenüberliegenden Seiten des Gitters (38; 438).

14. Verfahren gemäß Anspruch 12, das weiterhin ein mindestens teilweises Schmelzen des Gitters (338; 538) umfasst, um das Gitter an die mindestens eine Vliesschicht (312'; 512') zu kleben.

15. Verfahren gemäß Anspruch 14, das weiterhin umfasst: Durchführung der Thermofixierung und der Schmelze in dem selben Prozess.

## Revendications

1. Manchon non tissé auto-enroulant (210 ; 410) pour acheminer et protéger des éléments allongés, comprenant une paroi non tissée allongée (212 ; 312 ; 412 ; 512) ayant des côtés opposés s'étendant le long d'un axe longitudinal dudit manchon, lesdits côtés s'enroulant automatiquement autour dudit axe longitudinal pour fournir une cavité tubulaire en l'absence d'une force appliquée extérieurement, lesdits côtés pouvant s'étendre à distance l'un de l'autre sous une force appliquée extérieurement afin d'exposer ladite cavité pour l'insertion des éléments allongés, lesdits côtés revenant à leur configuration auto-enroulée suite à la suppression de la force appliquée extérieurement,
**caractérisé en ce que** ladite paroi (212 ; 312 ; 412 ; 512) a au moins une couche non tissée (212' ; 312' ; 412' ; 512') et un treillis (38 ; 338 ; 438 ; 538) de matériau polymère thermodurcissable fixé à ladite au moins une couche non tissée ; ledit treillis ayant des premières régions distinctes et des secondes régions distinctes (232, 234 ; 332, 334 ; 432, 434 ; 532, 534), lesdites premières et secondes régions s'étendant de manière alternée, axiale ou circonférentielle et étant différentes et dotant ainsi ladite paroi de propriétés physiques non uniformes.

2. Manchon selon la revendication 1, dans lequel ledit treillis (438 ; 538) est une pièce de matériau monolithique.

3. Manchon selon la revendication 2, dans lequel ledit treillis comprend des nervures dans le sens de la chaîne (434 ; 534) s'étendant de manière sensiblement parallèle audit axe longitudinal et des nervures dans le sens de la trame (432 ; 532) s'étendant de manière sensiblement transversale par rapport audit axe longitudinal.

4. Manchon selon la revendication 3, dans lequel lesdites nervures dans le sens de la trame (432 ; 532) ont une surface transversale accrue par rapport auxdites nervures s'étendant dans le sens de la chaîne (434 ; 534).

5. Manchon selon la revendication 2, dans lequel ledit treillis (438 ; 538) comprend un matériau à faible point de fusion.

6. Manchon selon la revendication 1, dans lequel ladite paroi a une paire de couches non tissées (412') fixées aux côtés opposés dudit treillis (438).

7. Manchon selon la revendication 6, comprenant en outre une couche réfléchissante (440) fixée à l'une desdites couches non tissées (412'), ladite couche réfléchissante formant une surface externe dudit manchon (410).

8. Manchon selon la revendication 1, comprenant en outre une couche réfléchissante (340 ; 540) fixée audit treillis (538).

9. Manchon selon la revendication 1, dans lequel ledit treillis (38 ; 338) est une couche de tricot ayant des fils continus dans le sens de la chaîne (234 ; 334) s'étendant de manière sensiblement parallèle audit axe longitudinal et des fils continus dans le sens de la trame (232 ; 332) s'étendant de manière sensiblement transversale par rapport audit axe longitudinal, lesdits fils continus dans le sens de la chaîne étant réalisés avec un matériau différent que lesdits fils s'étendant dans le sens de la trame.

10. Manchon selon la revendication 9, dans lequel lesdits fils s'étendant dans le sens de la chaîne (234 ; 334) sont du PET.

11. Manchon selon la revendication 9, dans lequel lesdits fils s'étendant dans le sens de la trame (232 ; 332) sont réalisés avec un matériau à faible point de fusion.

12. Procédé pour fabriquer un manchon non tissé (210 ; 410) pour acheminer et protéger des éléments allongés contre la chaleur radiante et/ou générant du bruit et des vibrations, comprenant les étapes consistant à :
former une paroi (212 ; 312 ; 412 ; 512) de matériau non tissé à partir d'au moins une couche non tissée,
**caractérisé en ce que** le procédé comprend en outre les étapes consistant à :
former un treillis (38 ; 338 ; 438 ; 538) de matériau polymère thermodurcissable de sorte que ledit treillis est fixé à la au moins une couche non tissée, ledit treillis ayant des premières régions distinctes et des secondes régions distinctes (232, 234 ; 332, 334 ; 432, 434 ; 532, 534), lesdites premières et secondes régions s'étendant de manière alternée, dans le sens de la chaîne ou dans le sens de la trame et étant différentes ; et
faire durcir thermiquement la paroi (212 ; 312 ; 412 ; 512) dans la configuration tubulaire de sorte que lesdites premières et secondes régions alternées (232, 234 ; 332, 334 ; 432, 434 ; 532, 534) dudit treillis (38 ; 338 ; 438 ; 538) s'étendent de manière axiale ou circonférentielle et fournissant ainsi ladite paroi avec des propriétés physiques non uniformes.

13. Procédé selon la revendication 12, comprenant en outre l'étape consistant à former la paroi à partir d'une paire de couches non tissées (212' ; 412') et fixer les couches non tissées aux côtés opposés du treillis (38 ; 438).

14. Procédé selon la revendication 12, comprenant en outre au moins l'étape consistant à faire fondre partiellement le treillis (338 ; 538) pour relier le treillis à ladite au moins une couche non tissée (312', 512').

15. Procédé selon la revendication 14, comprenant en outre l'étape consistant à réaliser le durcissement thermique et la fusion dans le même processus.
